Europäisches Patentamt

European Patent Office

Office européen des brevets

(19)

(11) Veröffentlichungsnummer: **0 367 824**

**A1**

(12)

# EUROPÄISCHE PATENTANMELDUNG
## veröffentlicht nach Art. 158 Abs. 3
## EPÜ

(21) Anmeldenummer: **88904714.8**

(22) Anmeldetag: **20.04.88**

(86) Internationale Anmeldenummer:
**PCT/SU88/00088**

(87) Internationale Veröffentlichungsnummer:
**WO 88/08252 (03.11.88 88/24)**

(51) Int. Cl.5: **A23C 9/127**

(30) Priorität: **30.04.87 SU 4230674**

(43) Veröffentlichungstag der Anmeldung:
**16.05.90 Patentblatt 90/20**

(84) Benannte Vertragsstaaten:
**DE FR GB IT**

(71) Anmelder: **VSESOJUZNY
NAUCHNO-ISSLEDOVATELSKY I
KONSTRUKTORSKY INSTITUT MOLOCHNOI
PROMYSHLENNOSTI
ul. Ljusinovskaya, 35
Moscow, 113093(SU)**

(72) Erfinder: **IVANOVA, Lilia Nikolaevna
ul. Khodynskaya, 12-37
Moscow, 123022(SU)**
Erfinder: **ROZHKOVA, Irina Vladimirovna
ul. Yablochkova, 21-77
Moscow, 127322(SU)**
Erfinder: **SEMENIKHINA, Vera Filatovna
ul. Ostrovityanova, 24-1-13
Moscow, 117321(SU)**
Erfinder: **KNYAZEVA, Tatyana Nikolaevna
pr. Vernadskogo, 91-3-66
Moscow, 117526(SU)**
Erfinder: **CHAGAROVSKY, Alexandr Petrovich
Chernomorskaya doroga, 125-4-56
Odessa, 270114(SU)**

(74) Vertreter: **von Füner, Alexander, Dr. et al
Patentanwälte v. Füner, Ebbinghaus, Finck
Mariahilfplatz 2 & 3
D-8000 München 90(DE)**

(54) **VERFAHREN ZUR HERSTELLUNG VON KEFIR.**

(57) Verfahren zur Herstellung von Kefir schliesst das Normalisieren des Trockenmassegehaltes der gereinigten Kuhmilch, das durch Ultrafiltration der Milch bei einer Temperatur von 50 bis 55°C bis zur Erhöhung des Trockenmassegehaltes der normalisierten Milch um 0,5-4,0 Masse% verwirklicht wird, die weitere Wärmebehandlung bei einer Temperatur von 140°C, das Eintragen des an Kefirpilzen vorbereiteten Sauers in die normalisierte Milch, die Säuerung der erhaltenen Mischung bis auf einen pH-Wert von

5,0-4,7, das Aushalten der gesäuerten Mischung bei einer Temperatur von 18 bis 20°C bis auf einen pH-Wert von 4,7-4,5 ein, wonach abgefüllt wird.

EPAA-37224.7

# VERFAHREN ZUR HERSTELLUNG VON KEFIR

## Technisches Gebiet

Die Erfindung bezieht sich auf Milchindustrie und insbesondere betrifft sie ein Verfahren zur Herstellung von Kefir.

Kefir ist ein traditionelles Produkt in der Ernährungsration verschiedener Menschengruppen, darunter Kinder, kranker und geschwächter Leute. In der Ernährungsdiätetik dieser Kathegorie von Verbrauchern nimmt Kefir bis 60% der Tagesration ein. Von der Position der gegenwärtigen Konzeption der Ernährungshygiene aus soll die Formel dieses Alltagsproduktes (Kefirs) für verschiedene Verbraucherkathegorien unterschiedlich sein. So ist für die Ernährung von Kleinkindern (seit 6 Monaten) Kefir mit einem erhöhten Gehalt an Eiweissstoff als Hauptwachstumsfaktor, dagegen mit einem geringeren Gehalt an Mineralsalzen und Äthanol erforderlich, für geschwächte Menschen, insbesondere in der postoperativen Zeit ist ein Produkt mit erniedrigtem Lactose- und erhöhtem Eiweissgehalt notwendig; für die Menschen mit Erkrankungen des Magendarmtraktes ist ein energiearmes Produkt mit hohen antibakteriellen Eigenschaften vorzuziehen. Produkt mit einem erhöhten Eiweissgehalt kann zur Verpflegung von Menschen nach Bestrahlung eingesetzt werden, weil Eiweissstoffe eine raschere Ausführung von radioaktiven Nukliden aus dem Organismus bewirken.

Die Heileigenschaften des Kefirs sind durch die Anhäufung darin von Produkten der Metabolie der Pilzsauermikroflora bedingt. Die von der Mikroflora des Pilzsauers produzierten Antibiotika gewährleisten antibiotische Eigenschaften des Produktes, die sich gegenüber den Bakterien der Darmstäbchengruppe in den Verdünnungen der Kulturflüssigkeit von I:I6; I:32; gegenüber Shigella sonnei 1:32, I:64 zeigen. Bei der Lagerung des Kefirs erfolgt eine weitere Ansammlung von Antibiotika, was zur Erhöhung seiner Haltbarkeit beiträgt.

Zugrundeliegender Stand der Technik

Bekannt ist ein Verfahren zur Herstellung von Kefir, das die Milchpasteurisierung, Homogenisierung
derselben, Abkühlung, Ansäuern mit einem an Kefirpilzen angesetzten Sauer, Reifung und Abkühlung des
Endproduktes (GB, B, I300355) vorsieht. Jedoch gibt
dieses Verfahren, welches den Einsatz von Naturkuhmilch als Ausgangsrohstoff vorsieht, keine Garantie
dafür, dass das fertige Produkt mit erforderlichen
organoleptischen und rheologischen Charaktaristiken
erzeugt wird, weil sich der Eiweissgehalt der Milch
je nach Jahreszeit, geographischen Zonen, Fütterungsbedingungen und Viehrasse erheblich ändern kann.
Fällt der Trockenmassegehalt der Milch unter 8,5 Masse%, lässt sich ein Kefir mit guten rheologischen
Eigenschaften nicht erhalten.

Bekannt ist ein von der Firma "Unilever" (Grossbritannien) entwickeltes Verfahren zur Herstellung von
einem Sauermilchprodukt (Joghurt), welches eine Konzentrierung von Eiweiss im Ausgangsstoff bis auf 7-I5
Masse% durch Ultrafiltration, Wärmebehandlung des Konzentrates bei einer Temperatur von 55 bis 65$^{o}$C innerhalb von 30 Minuten oder bei einer Temperatur von 70
bis 80$^{o}$C ohne Rast, Abkühlung auf eine Temperatur von
40 bis 50$^{o}$C, Einsäuerung mit Milchsäuerbakterien (der
Art Lactobacillus bulgaricus, Streptococus lactis,
Streptococus thermophilus, Lactobacillus acidophilus),
Säuerung, Abfüllung, Lagerung vorsieht. ("Ultrafiltratsionnaja obrabotka molochnogo syrja i tendentsia dalneishei ego pererabotki". Obzornaja informatsia, I986,
TsNIITAImjasomolprom, Moskva, s. 23. "Ultrafiltrationsbehandlung von Milchrohmaterial und Tendenz zur weiteren Verarbeitung desselben", Übersichtsinformation).

Der Säuerung von Joghurt liegt Prozess der Milchsäuregärung zugrunde, welcher sogar bei einer Steigerung der Eiweisskonzentration in Milch bis auf 7-15 Masse% recht aktiv verläuft. Dazu tragen genügend hohe Kultivierungstemperaturen (40-42°C) und biochemische Aktivität von Mikroorganismen, die im Gärungsmittel vorhanden sind, bei. Das erhaltene Produkt, Joghurt, zeichnet sich durch eine erhöhte Viskosität und eine längere, als für Kefir Haltbarkeiszeit aus. Die Mikroorganismen Kulturen des Joghurt-Gärungsmittels bilden eine Milchsäure, die zu 90% aus D(-)-Form besteht und für den Kinderorganismus physiologisch nicht geeignet ist, was die Anwendung von Joghurt in der Ernährung einiger Menschengruppen hemmt.

Der Technologie der Kefir-Herstellung liegt nicht ein, sondern zwei Prozesse zugrunde, und zwar die Milchsäuregärung und die Alkoholgärung.

Die Mikroflora des Kefirpilzsauers enthält nicht nur Milchsäurebakterien, sondern auch Hefe; das Entwicklungsoptimum von Bakterien des Kefirpilzsauers liegt bei einer Temperatur von 18 bis 26°C, was sich von der Entwicklungstemperatur des Joghurt-Gärungsmittels von 40 bis 42°C wesentlich unterscheidet, deswegen unterscheidet sich auch Charakter der Entwicklung dieser Kulturen in der durch Ultrafiltration mit Eiweiss bereicherten Milch beträchtlich. Ausserdem wird bei der Steigerung des Eiweissgehaltes der Milch über 7-15 Masse% keine ausreichende Entwicklung von Kulturen des Kefirsauers (Hefe) gesichert. Der Säuerungsprozess dehnt sich in der Zeit aus, dadurch ergibt sich ein Produkt mit einem ausdruckslosen, ziemlich leeren Geschmack. Darüber hinaus erscheinen im fertigen Produkt wegen der Langwierigkeit des Säuerungsprozesses Fehler proteolytischen Charakters, bitterer Geschmack, fremde Beigeschmäcke.

Bekannt ist ein Verfahren zur Herstellung von Kefir, das eine Anreicherung des Endproduktes mit einer Eiweisskomponente vorsieht. Das Verfahren schliesst Reinigung der Ausgangsmilch, Normalisieren des Fettgehaltes der Milch, Normalisieren des Trockenmassegehaltes der Milch, Wärmebehandlung, Homogenisierung, Abkühlung auf Einsäuerungstemperatur, Eintragen eines an Kefirpilzen angesetzten Sauers in einer Menge von 1 bis 5%, bezogen auf die Milchmasse, Säuerung der erhaltenen Mischung, Abkühlung des Gerinnsels mit anschliessendem Halten und Abkühlung des Fertigproduktes ein. Das Normalisieren des Trockenmassegehaltes der Milch wird durch Zugabe zur Milch mit dem normalisierten Fettgehalt von Natriumkaseinat durchgeführt. Das trockene Natriumkaseinat wird in der Milch bei einer Temperatur von 60 bis 70$^{o}$C vorher gelöst (Z.B.Zobkova i drugie. "Proizvodstvo moloka i molochnykh produktov s napolnitelami i vitaminami", 1985, Agropromizdat, Moskva, s. 80. "Erzeugung von Milch und Milchprodukten mit Füllstoffen und Vitaminen").

Jedoch bewirkt die Anreicherung des Kefirs mit trockenem Natriumkaseinat keine Regelung der Zusammensetzung des herzustellenden Produktes hinsichtlich des Gehaltes an Kohlenwasserstoffen und Mineralstoffen, verbessert keinen Nähr- und biologischen Wert des Produktes und reduziert sogar seine organoleptischen Kennwerte häufig. Das ist darauf zurückzuführen, dass bei der Herstellung von Natriumkaseinat Elektrolyte und Koagulationsmittel (CaCl HCl, Polysaccharide) verwendet werden, die zu Phasen- und Strukturveränderungen der Milcheiweissstoffen führen, was sich auf deren Nähr- und biologischen Wert negativ auswirkt. Ausserdem gelingt es nicht, Kefir mit guten organoleptischen und rheologischen Kennwerten zu produzieren.

Der vorliegenden Erfindung liegt die Aufgabe zugrunde, durch die Änderung des Verhältnisses zwischen Eiweissstoff und Lactose ein Verfahren zur Herstellung von Kefir zu entwickeln, welcher einen höheren Nährwert bei verbesserter Qualität des Endproduktes aufweist.

Diese Aufgabe wird dadurch gelöst, dass man im Verfahren zur Herstellung von Kefir, das die Reinigung der Ausgangs-Kuhmilch, das Normalisieren des Trockenmassegehaltes der Milch, die Wärmebehandlung, das Eintragen des an Kefirpilzen vorbereiteten Sauers in einer Menge von 1 bis 5%,bezogen auf die Milchmasse, die Säuerung der gewonnenen Mischung bei einer Temperatur von 20 bis 25°C, die Abkühlung der gesäuerten Mischung auf eine Temperatur von 6 bis 8°C, die Abfüllung vorsieht, erfindungsgemäss das Normalisieren des Trockenmassegehaltes der Milch durch Ultrafiltration der Ausgangsmilch bei einer Temperatur von 50 bis 55°C verwirklicht, wobei man den Trockenmassegehalt der normalisierten Milch um 0,5-4,0 Masse% gegenüber dem Trockenmassegehalt der Ausgangsmilch erhöht, die Wärmebehandlung der normalisierten Milch bei einer Temperatur von 140°C verwirklicht und die Säuerung der Mischung bis zum Erreichen eines pH-Wertes von 5,0 bis 4,7, das Aushalten der gesäuerten Mischung bei einer Temperatur von 18 bis 20°C bis zum Erreichen eines pH-Wertes von 4,7-4,5 durchführt.

Dank der angemeldeten Erfindung erhält man Kefir mit einem höheren biologischen Nährwert (Proteinwirkungsverhältnis beträgt 98,5%, antibiotische Eigenschaften gegenüber den Bakterien der Darmgruppe zeigen sich in den Verdünnungen der Kulturflüssigkeiten bis 1:32, 1:64) und einer verbesserten Zusammensetzung von Aminosäuren.

Um Kleingerinnung des Eiweissgerinnsels und eine bessere Assimilation desselben im Kinderorganismus zu bewirken, ist es erfindungsgemäss zweckmässig, der Ausgangsmilch nach der Reinigung derselben Natrium- und/oder Kaliumzitrate in einer Menge von 0,02 bis 0,03 Masse% zuzusetzen.

Um ein Produkt (Kefir) von dichter Konsistenz mit unzerstörtem Gerinnsel zu erhalten, ist es erfindungsgemäss zweckmässig, die Abfüllung direkt nach dem Eintragen des Sauers in die normalisierte Milch durchzuführen, danach die zu säuernde Mischung bei einer Temperatur von 20 bis 25°C bis zum Erreichen eines pH-Wertes von 5,0 bis 4,7 und anschliessend bei einer Temperatur von 18 bis 20°C bis auf einen pH-Wert von 4,7 bis 4,5 auszuhalten.

Zur Herstellung von Kefir mit verbesserten organoleptischen Liebhabereigenschaften ist es erfindungsgemäss zweckmässig, vor der Abfüllung in die gesäuerte Mischung oder in die Mischung aus der normalisierten Milch und Sauer Obst- und Beerensirupe in einer Menge von 8 bis 10 Masse% und Nahrungsaromastoffe in einer Menge von 0,005 bis 0,01 Masse% zuzugeben.

Weitere Ziele und Vorteile der vorliegenden Erfindung werden aus der nachstehenden ausführlichen Beschreibung des Verfahrens zur Herstellung von Kefir und den Beispielen für die konkrete Ausführung dieses Verfahrens verständlich sien.

Besste Ausführungsvariante der Erfindung

Das erfindungsgemässe Verfahren zur Herstellung von Kefir wird wie folgt durchgeführt.

Die Ausgangskuhmilch (Vollmilch - mit einem Trockenmassegehalt von 11,0 Masse% oder Magermilch - mit einem Trockenmassegehalt von 8,0 Masse%) wird zur Erhöhung der hygienischen Sicherheit, Verminderung der bakteriellen Besamung der Milch, Entfernung von mechanischen Beimengungen und Verunreinigungen einer Reinigung an den Milchschleuder-Milchreinigern bekannter Konstruktion unterworfen.

Danach wird der Fettgehalt der gereinigten Vollmilch unter Anwendung von bekannten Einrichtungen
Milchschleudern, normalisiert. Bei solch einer Normalisierung beträgt der Fettgehalt der Milch in beispielsweise von I,0 Masse% bis 3,2 Masse%.

In der gereinigten und, notwendigerfalls · fettnormalisierten Milch, wird der Trockenmassegehalt
normalisiert, was erfindungsgemäss durch Ultrafiltration bei einer Temperatur von 50 bis 55°C verwirklicht wird. Es ist möglich, die Ultrafiltration an bekannten Ultrafiltrationsanlagen auszuführen, die mit
Polysulfonamid-Membranen zweiter Generation mit einer
Porengrösse von höchstens 200 Å versehen und von den
Gesundheitsbehörden zur Anwendung in der Nahrungsmittelindustrie zugelassen sind. Es ist zweckmässig,
die Ultrafiltration bei einem Druck von höchstens 6
atm durchzuführen.

Das Konzentrieren der Milch durch Ultrafiltration
ermöglicht es, den Massenanteil an nativem Eiweissstoff im Endprodukt (darunter auch an molkigen Eiweisskörpern) zu vergrössern, den Gehalt an Mineralsalzen
und Lactose herabzusetzen, was zur Erhöhung der Viskosität und physikalischer Stabilität des fertigen Produktes führt.

Das Konzentrieren der Milch durch Ultrafiltration
sei unter Erhöhung des Trockenmässegehaltes gegenüber dem Trockenmassegehalt der Ausgangsmilch um 0,5
-4,0 Masse% durchgeführt. Bei einem Trockenmassegehalt
der Milch unter 8,5 Masse% (der Trockenmassegehalt ist
weniger als um 0,5 Masse% erhöht worden) ändern sich
rheologische Kennwerte und Viskosität des Produktes im
Vergleich zu Normalmilch praktisch nicht, was zur Herstellung eines Produktes mit guten organoleptischen
Kennziffern unzureichend ist. Eine Vergrösserung der
Trockenmassekonzentration um mehr als 4,0 Masse% (Trockenmassegehalt der Milch beträgt 16,0 Masse%) führt zur beträchtlichen Steigerung der Viskosität, Gerinnseldichte, das Produkt verliert seine organoleptische Spezifität.

Bei der Konzentrierung der Milch nach der Ultrafiltrationsmethode auf einem Trockenmassegehalt von 8,5 bis I6% verlaufen Prozesse der Milchsäure- und Alkoholgärung genügend aktiv. Im fertigen Produkt sammeln sich bis I,5-2 Masse% Milchsäure der optisch aktiven Form L(+) und folgende Gruppen von Mikroorganismen, Zellen/ml, an:

- mosophile Milchsäure-Streptokokken der Art Streptococus lactis, Streptococus cremoris $IO^9$
- Aromabildner $IO^7$
- Hefe $IO^5$
- Essigsäurebakterien $IO^5$
- thermophile Milchsäurestäbchen $IO^5$

Das Produkt besitzt einen stark ausgeprägten spezifischen Geschmack und ein Aroma, eine genügend dichte schichtungsfreie homogene Konsistenz. Es ist geeignet für die Ernährung von Kindern, kranken und geschwächten Menschen.

Die Anwendung der Ultrafiltration bei der Herstellung von Kefir ermöglicht es, den Massenanteil an Eiweissstoff im fertigen Produkt ohne Erhöhung des Masseanteils an Lactose zu vergrössern. Das führt zur Erhöhung der Viskosität und physikalischer Stabilität des Produktes.

Mittels Ultrafiltration der bei der Herstellung von Kefir eingesetzten Milchrohstoffe gelingt es ebenfalls, solch einen Nachteil des Prozesses wie unregelbare Säuerung des Produktes bei seiner Lagerung auszugleichen, was durch Steigerung des Eiweissgehaltes im Produkt und teilweise Entfernung der Lactose erreicht wird.

EP 0 367 824 A1

In der Normalmilch beträgt das Verhältnis zwischen
Eiweiss und Lactose I:I,5.

In der durch Ultrafiltration behandelten Milch
beträgt das Verhältnis Eiweiss:Lactose I:I,I, was neben gesagtem die Assimilation des Produktes positiv
beeinflusst.

Die Ultrafiltration der Milch wird bei einer Temperatur von 50 bis 55°C durchgeführt, weil dabei die
grösste Leistung der Ultrafiltrationsanlage gesichert
wird, die grösste Geschwindigkeit und der besste
Filtrationseffekt erreicht wird (es wird eine hohe
Selektivität der Membranen gesichert, darunter für
Lactose und Mineralsalze), was letzten Endes die Zusammensetzung und die Qualität des fertigen Produktes
positiv beeinflusst.

Erfindungsgemäss wird der Trockenmassegehalt nur
eines Teiles der Ausgangsmilch bei einer Temperatur
von 50 bis 55°C durch Ultrafiltration normalisiert.
Das dabei erhaltene Eiweisskonzentrat, in welchem der
Trockenmassegehalt um 5-IO Masse% höher als derselbe
in der Ausgangsmilch ist, wird mit dem durch Ultrafiltration nicht behandelten Teil der Ausgangsmilch vermischt, wodurch man normalisierte Milch erhält, in welcher der Trockenmassegehalt um 0,5-4,0 Masse% höher
als derselbe in der Ausgangsmilch ist.

Die Anreicherung der Ausgangsmilch mit einem molkige Eiweissstoffe enthaltenden Eiweisskonzentrat ändert die Aminosäure-Zusammensetzung des Endproduktes
in der Richtung der Vergrösserung des gesamten Gehaltes an Aminosäuren, darunter an solchen unersetzlichen
wie Methionin, Threonin sowie Cystin, Serin, Tyrosin,
die für den menschlichen Organismus äusserst erforderlich sind.

In dem Fall, wo durch Ultrafiltration der Trockenmassegehalt der Milch über 2,0 Masse% gegenüber dem Ausgangswert gesteigert wird, ist es erfindungsgemäss zweckmässig, vor der Ultrafiltrationsstufe der Milch Kalium- und/oder Natriumzitrate in einer Menge von 0,02-0,03 Masse% zuzugeben.

Die Zugabe der Milch von genannten Salzen bewirkt im weiteren die Feinzerteilung der Eiweissfraktion des Gerinnsels, eine bessere Assimilation des Endproduktes, seine Verdaulichkeit (weil sich in Anwesenheit dieser Salze die Oberfläche der Eiweissflocken, worauf die Magensaft einwirken kann, vergrössert).

Ausserdem erfolgt bei der Milchkonzentrierung durch Ultrafiltration bis auf mehr als 2 Masse% die Anreicherung im erhaltenen Produkt von unlöslichen Kalziumsalzen (Kalziumlaktat), die die Milch durch fremde Beigeschmäcke auszeichnen. Die Zugabe von Kalium- und Natriumzitraten führt zur Umsetzung dieser Verbindungen unter anschliessender Ausscheidung von Kalziumsalzen in Form von einem löslichen Salz, Kalziumzitrat, was letzten Endes organoleptische Kennwerte des Kefirs verbessert.

Bei der Ultrafiltration der Milch, bei welcher der Trockenmassegehalt auf weniger als 2 Masse% erhöht wird, erfolgt eine unwesentliche Vergrösserung des Gehaltes an Kalziumsalzen im Konzentrat, was keinen negativen Einfluss auf die Organoleptik des fertigen Produktes ausübt.

Nach der Zugabe von Zitraten wird, wie bereits erwähnt, der Fettgehalt und der Trockenmassegehalt der Milch normalisiert, die Normalisierung wird, durch Ultrafiltration bei 50 bis 55°C bis auf eine Konzentration von 8,5 bis 16,0 Masse% (Erhöhung um 0,5-4,0 Masse%) oder durch Zugabe des durch Ultrafiltration erhaltenen Eiweisskonzentrates durchgeführt. Die durch Ultrafiltration behandelte Milch wird zur Sicherung von hohen hygienischen und rheologischen Kennwerten des erhaltenen Produktes einer Wärmebehandlung bei einer Temperatur von 90 bis 140°C unterworfen. Danach wird die Milch auf eine Temperatur von 18 bis 25°C abgekühlt, und es wird der Milch ein an Kefirpilzen angesetztes Sauer in einer Menge von 1 bis 5%, bezogen auf Milchmasse, zur Säuerung zugegeben.

Kefirpilze stellen, wie bekannt, eine natürliche Symbiose aus folgenden Mikroorganismen dar: Milchsäurestreptokokken, Essigsäurebakterien, Milchsäurestäbchen und Hefe, die die Lactose vergären und nicht vergären.

Zur Herstellung des Sauers verwendet man eine bekannte Technologie, die darin besteht, dass die Magermilch bei einer Temperatur von 80 bis 95°C pasteurisiert und dann auf I5-25°C abgekühlt wird. Der dadurch vorbereiteten Milch setzt man die genannten Kefirpilze (1 Teil Pilze pro 30-50 Teile Milch) zu. Bei der Säuerung wird das Gemisch aus Pilzen und Milch innerhalb von 1 bis IO Minuten gerührt, vorzugsweise alle 6 Stunden seit der Zugabe von Pilzen in die Magermilch, Kefirpilze werden vom erhaltenen Sauer abgetrennt.

Je nach bestimmung des Kefirs können die Bedingungen der Sauerkultivierung um ein geringes verändert werden. Somit ist die Sauerzubereitung für Kinderkefir zur Reduzierung des Hefegehaltes darin gekürzt.

Die Art der Entwicklung der Kefirmikroflora in der durch Ultrafiltration behandelten Milch unterscheidet sich von der Entwicklung derselben in Normalmilch bei der Kefirerzeugung nach dem bekannten traditionellen Verfahren im wesentlichen nicht. Jedoch wird in Anwensenheit einer erhöhten Eiweissmenge eine Vergrösserung der biochemischen Aktivität von Mikroorganismen nachgewiesen. Dadurch entwickelt sich die Mikroflora des an der durch Ultrafiltration behandelten Milch vorbereiteten Kefirsauers in rascherem Tempo, was den Prozess der Herstellung des Endproduktes verkürzen läßt.

Von der Intensivierung des Säuerungsprozesses von Kefir, welcher an der durch Ultrafiltration behandelten Milch zubereitet wird, zeugen Säurewerte des Produktes (Tabelle 1).

Tabelle 1

Veränderung des Säuregehaltes des Produktes (pH-Wert) in Anhängigkeit von Trockenmassegehalt und Prozessdauer

| Prozess-dauer, h | Trockenmasseanteil | | | |
|---|---|---|---|---|
| | Kontrolle | 8,5 | 9 | 10 |
| | pH | pH | pH | pH |
| 1 | 2 | 3 | 4 | 5 |
| 0 | 6,60 | 6,65 | 6,65 | 6,63 |
| 6 | 5,85 | 5,82 | 5,80 | 5,78 |
| I0 | 5,09 | 5,I0 | 5,I2 | 5,I0 |
| I2 | 4,78 | 4,80 | 4,80 | 4,75 |
| I6 | 4,62 | 4,62 | 4,50 | 4,45 |
| Prozess-dauer, h | 11 | 12 | 15 | 17 |
| | pH | pH | pH | pH |
| 1 | 6 | 7 | 8 | 9 |
| 0 | 6,60 | 6,58 | 6,55 | 6,52 |
| 6 | 5,75 | 5,72 | 5,70 | 5,70 |
| I0 | 5,02 | 5,00 | 4,98 | 4,90 |
| I2 | 4,72 | 4,70 | 4,70 | 4,65 |
| I6 | 4,48 | 4,45 | 4,45 | 4,43 |

Die Säuerung des Produktes wird bei einer Temperatur von I8 bis 25°C bis zur Gerinnselbildung (pH-Wert 5,0-4,7) durchgeführt, wonach das Gerinnsel auf eine Temperatur von I8 bis 20°C abgekühlt und bis zum Erreichen eines pH-Wertes 4,5-4,7 gehalten wird.

Nachdem das Gerinnsel gebildet und ein pH-Wert von 5,0-4,7 erreicht ist, darf jedoch die Milchsäuregärung nicht als vollkommen beendet betrachtet werden. Wegen eines erhöhten Eiweiss- und Trockenmassegehaltes erweist sich der Milchsäuregeschmack des erhaltenen Produktes als schwach ausgeprägt. Zur weiteren Ansammlung von Metabolieprodukten der Milchsäurebakterien im Gerinnsel und gleichzeitigen Aktivierung der Alkoholgärung wird das gesäuerte Gemisch bei einer Temperatur von I8 bis 20°C gehalten, bei welcher sich Milchsäurebakterien weiter entwickeln und sich gleichzeitig die Entwicklung der Hefemikroflora aktivisiert, die sich bei der oberhalb 20°C liegenden Temperatur sehr schwach entwickelte; für die Entwicklung der Hefemikroflora ist eine Temperatur von I4 bis I8°C optimal.

Das Aushalten der gesäuerten Mischung bei einer Temperatur von I8 bis 20°C bis auf einen pH-Wert 4,5-4,7 führt zur aktiven Ansammlung von Milchsäurebakterien im Produkt.

Während des Aushaltens bei einer Temperatur von I8 bis 20°C wird das Milchgerinnsel nach Verlauf der ersten Stunde innerhalb von IO bis I5 Minuten geführt.

Die weitere Rührperiodizität des Gerinnsels bei dem Aushalten wird je nach der erforderlichen Zusammensetzung der Mikroflora und Bestimmung des Produktes eingestellt.

Je nach Zweckbestimmung des fertigen Produktes kann man den Mikrofloragehalt im fertigen Produkt durch die Änderung der technologischen Parametern in genannten Bereichen regeln.

Der zur Kinderernährung verwendete Kefir muss weniger Hefe enthalten, die im Prozess ihrer Lebensvorgänge neben Vitaminen der Gruppe B und $CO_2$ eine geringe Menge Äthanol produziert, dessen Vorliegen in Produkten der Kinderernährung unerwünscht ist. In diesem Fall wird die Rastzeit des Produktes nach der Säuerung bis auf 3-4 Stunden verkürzt, was einen geringeren Gehalt des fertigen Produktes an Hefe bewirkt, jedoch die Geschmackeigenschaften des Produktes und seinen biologischen und Nährwert nicht beeinträchtigt.

Durch Variieren von vorgeschlagenen Arbeitsweisen der Säuerung, Abkühlung und anschliessenden Rast des Milchgerinnsels kann man eine notwendige Entwicklung aller Gruppen der Sauermikroflora in der Milch mit erhöhtem Trockenmassegehalt sichern. Die Anwendung von erfindungsgemässen Arbeitsweisen der Säuerung, Abkühlung, anschliessenden Rast des Gerinnsels neben der Erhöhung des Trockenmassegehalts der Ausgangsmilch ändert beträchtlich die strukturell-mechanischen Eigenschaften des Kefirs. Der nach dem erfindungsgemässen Verfahren herstellte Kefir besitzt eine gute dichte Struktur, die keine Molke anscheidet.

Die bei einer Temperatur von 18 bis 20$^{o}$C bis auf einen pH-Wert von 4,5-4,7 ausgehaltene gesäuerte Mischung wird auf eine Temperatur von 6 bis 8$^{o}$C abgekühlt und zur Abfüllung geleitet.

Erfindungsgemäss ist es zweckmässig, der gesäuerten Mischung vor deren Abfüllung Obst- und Beerensirupe in einer Menge von 8 bis 10 Masse% und Nahrungsaromastoffe in einer Menge von 0,005 bis 0,01 Masse% zuzugeben. Es ist ebenfalls möglich, die erwähnten Sirupe und Aromastoffe der Mischung aus der mittels Ultrafiltration behandelten Milch und dem Sauer zuzugeben.

Erfindungsgemäss kann die Abfüllung direkt nach

EP 0 367 824 A1

dem Aushalten der gesäuerten Mischung, das, wie bereits erwähnt, bei einer Temperatur von I8 bis 20°C bis zum Erreichen eines pH-Wertes von 4,7 bis 4,5 durchgeführt wird, erfolgen.

Ausserdem kann die Abfüllung unmittelbar nach dem Eintragen des Sauers in die Milch; deren Trockenmassegehalt normalisiert ist, vorgenommen werden.

Der Gehalt an allen Gruppen von Mikroorganismen im aus der Milch mit einem erhöhten Trockenmassegehalt erzeugten fertigen Produkt hat sich von der Menge an diesen Mikroorganismen im nach dem traditionellen Verfahren herstellten fertigen Produkt nicht unterscheidet.

Bei der Säuerung und Abkühlung unter anschliessendem Aushalten erfolgen Veränderungen von organoleptischen, physikalisch-chemischen Kennwerten der verwendeten konzentrierten Milch unter Einfluss von biochemischen und mikrobiologischen Prozessen.

Durch die Verwertung der Lactose von Milchsäurebakterien und Hefe sinkt deren Gehalt im fertigen Produkt um 0,9-I,5%, es erfolgt eine Ansammlung von Milchsäure, Aromabildnern (Azetaldehyd, Azeton, Azetoin), Fermenten.

Durch die proteolytische Aktivität der Milchsäurebakterien ändert sich die Eiweisszusammensetzung, erfolgt eine Ansammlung von freien Aminosäuren, lebenden Zellen der Mikroorganismen und Produkten der Lebensvorgänge derselben sowie Synthese von Vitaminen der Gruppe B (Riboflavin, Folsäure).

Die erfindungsgemässe Ultrafiltration führt zu keiner Änderung von nativen Eigenschaften der Ausgangsmilch, was eine bessere Assimilations des Produktes, seinen biologischen Nährwert bewirkt.

Das Proteinwirkungsverhältnis für den nach dem bekannten Verfahren hergestellten Kefir mit dem Trockenmasseanteil 8,5 Masse% betrug 96,3% und für den nach dem erfindungsgemässen Verfahren erzeugten Kefir mit gleichem Trockenmassegehalt - 98,5%, was vom erhöhten biologischen und Nährwert des Produktes zeugt.

Die antibiotischen Eigenschaften des nach dem erfindungsgemässen Verfahren hergestellten Kefirs zeigen sich gegenüber den Bakterien der Darmgruppe in der verdünnten Kulturflüssigkeit bis 1:32, I:64. Der erhaltene Kefir enthält folgende Aminosäuren: Valin (185 Gew. Teile), Isoleuzin (I96 Gew. Teile), Leuzin (340 Gew. Teile), Lysin (280 Gew. Teile), Methionin (95 Gew. Teile), Threonin (163 Gew. Teile), Phenylalanin (184 Gew. Teile), Alanin (131 Gew. Teile), Arginin (130 Gew. Teile), Asparaginsäure (264 Gew. Teile), Histidin (101 Gew. Teile), Glyzin (63 Gew. Teile), Glutaminsäure (621 Gew. Teile), Prolin (341 Gew. Teile), Serin (230 Gew. Teile), Tyrozin (196 Gew. Teile), Cystin (55 Gew. Teile).

Die vorliegende Erfindung wird anhand der folgenden Ausführungsbeispiele näher erläutert.

Beispiel 1

1209 kg Magermilch mit dem Trockenmassegehalt 8 Masse% (Eiweiss 2,9 Masse%) werden 1 Stunde ausgehalten, auf die Temperatur von 50°C erwarmt und auf die mit einer Polysulfonamid-Membran mit einer Porengrösse von höchstens 200 Å versehenen Ultrafiltrationsanlage geleitet, die Ultrafiltration wird bis auf einen Trockenmassegehalt des Konzentrates 8,5 Masse% (Eiweissgehalt 3,4 Masse%) durchgeführt, dabei erhält man 1000 kg konzentrierte Magermilch mit dem Trockenmasseanteil 3,5%.

Danach wird die konzentrierte Milch bei einer Temperatur von 95°C und 2 Minuten Rast pasteurisiert, auf 22°C abgekühlt, mit 2 Masse% Kefirsäuer eingesäuert, bis auf den pH-Wert 5,0 gesäuert, ferner auf 18°C abgekühlt und bei dieser Temperatur Kefir bis auf den pH-Wert 4,5 ausgehalten. Danach wird das erhaltene Produkt gerührt, abgefüllt, auf 8°C abgekühlt. Man erhält ein Produkt mit homogener sahneartiger Konsistenz (Viskosität 2 s), das mit molkigen Eiweissstoffen angereichert ist und einen reinen erfrischenden leicht scharfen Sauermilchgeschmack hat. Es ist milchweiss von einem cremefarbenen Ton. Der Trockenmasseanteil beträgt 8,5 Masse% (Eiweiss 3,4 Masse%), Säuregehalt 100 T, Kaloriengehalt des fertigen Produktes 35 kcal.

Beispiel 2

In 1000 kg Vollmilch mit dem Trockenmassegehalt 11 Masse% (Fettgehalt 3 Masse%, Eiweissgehalt 2,8 Masse%) werden 300 g Kalium- und Natriumzitrate in gleichen Mengen, 15 kg des durch Ultrafiltration der Ausgangsmilch erhaltenen Konzentrates bis zum Erreichen eines Trockenmassegehaltes von 12 Masse% eingetragen, sorgfältig gerührt, gereinigt, auf 55°C erwärmt, bei dem Druck von 20 MPa homogenisiert, bei einer Temperatur von 90°C unter 3 Minuten Rast pasteurisiert, auf 25°C abgekühlt, mit 1% Kefirpilzsauer, berechnet auf das Volumen der einzusäuernden Mischung, eingesäuert, bis auf den pH-Wert 4,7 gesäuert, auf 20°C abgekühlt. Bei der genannten Temperatur wird Kefir bis auf den pH-Wert 4,7 gehalten, weiter gerührt, abgefüllt, auf 6°C angekühlt. Man erhält ein Sauermilchprodukt mit dem Trockenmassegehalt 12%, mit homogener sahneartiger Konsistenz, reinem erfischendem leicht scharfem Sauermilchgeschmack, einer Viskosität von 32 s, Säuregehalt von 110 T, Kaloriengehalt von 38 kcal.

Beispiel 3

In 1400 kg Vollmilch mit dem Trockenmassegehalt 11 Masse% werden 230 g Kalium- und Natriumzitrate eingetragen, gereinigt, auf 53°C erwärmt, bei 20 MPa homogenisiert, einer Ultrafiltration bis auf einen Trockenmassegehalt des Konzentrates von 16 Masse% unterworfen. Das Konzentrat wird einer Wärmebehandlung bei 135°C innerhalb von 5 Sekunden unterzogen, auf 22°C abgekühlt, mit Pilzsauer (3 Masse%) eingesäuert, in Kleinverpackung angefüllt, auf 20°C abgekühlt, bis auf Bildung eines Gerinnsels mit dem pH-Wert 4,7 gesäuert und auf die Temperatur 8°C abgekühlt. Man erhält ein Produkt mit dichter, homogener sahneartiger Konsistenz und einer Viskosität, die nach der Zeit des Ausfliessens des Kefirgerinnsels aus einem Trichter bestimmt wurde und 40 s gleicht. Das Produkt besitzt reinen spezifischen Sauermilchgeschmack und ein Aroma, ist milchweiss.

Der Trockenmasseanteil im Produkt beträgt 16 Masse% (Eiweiss 6,0 Masse%), Säuregehalt 95 T. Das Produkt ist mit molkigen Eiweissstoffen bereichert, das Verhältnis Eiweiss:Lactose beträgt 1:1 (was für die Assimilation optimaler, als bei Normalmilch, ist).

Das Produkt zeichnet sich durch erhöhte Haltbarkeit aus, es ändert seine organoleptischen Charakteristiken bei der Kühllagerung bei 6°C während 6 Tage nicht.

Beispiel 4

In 500 kg Vollmilch mit dem Trockenmassegehalt 11,5 Masse% werden 300 g Kaliumzitrate eingetragen, auf 50°C erwärmt, homogenisiert, einer Ultrafiltration bis auf den Trockenmassegehalt 15 Masse% unterzogen, man unterwirft das Konzentrat einer Wärmebehandlung bei einer Temperatur von 92°C mit 5 Minuten Rast, kühlt auf 25°C ab, trägt 3% Kefirsauer ein, füllt in Kleinverpackung ab, hält bei dieser Temperatur bis auf den pH-Wert 5,0 aus, kühlt auf 18°C ab, hält bei dieser Temperatur bis auf den pH-Wert 4,5 aus, dann kühlt rasch auf 8°C ab und lagert in Kühlkammer.

Man erhält ein Sauermilchprodukt mit spezifischen Geschmack und Aroma, mit dichter Konsistenz, Säuregehalt 106 T, Trockenmassegehalt 15 Masse% (Eiweiss 5,0 Masse%), von milchweisser Farbe.

Das Produkt zeichnet sich durch einen hohen biologischen und Nährwert, eine gute Assimilation, erhöhte Viskosität - bis 40 s - aus.

## Beispiel 5

Man gewinnt Kefir unter den denjenigen in Beispiel 1 gleichen Bedingungen, jedoch gibt man demselben vor der Abfüllung 90 kg Zitrussirup und 100 g Zitrusesteröl zu.

Man erhält ein Produkt mit homogener Konsistenz, mit molkigen Eiweissstoffen und Obstzugaben bereichert, mit erfrischendem leicht scharfem Geschmack und gut ausgeprägtem Aroma des eingetragenen Füllstoffes.

## Beispiel 6

Man gewinnt Kefir unter den denjenigen in Beispiel 1 gleichen Bedingungen, jedoch trägt man in das fertige Produkt vor der Abfüllung desselben 80 kg Erdbeerensirup und 70 g Naturaromastoff ein.

Man erhält ein Produkt mit homogener Konsistenz, mit erfrischendem, leicht scharfem Geschmack und ausgeprägtem Aroma des eingetragenen Füllstoffes.

## Beispiel 7

Man erhält Kefir unter den denjenigen in Beispiel 2 gleichen Bedingungen, jedoch trägt man in das fertige Produkt vor der Abfüllung desselben 85 kg Aprikosensirup und 60 g identischen Naturaromabildner ein.

Man erhält ein Produkt mit homogener Konsistenz, mit molkigen Eiweissstoffen und Obstzusätzen bereichert, mit erfrischendem, leicht scharfem Geschmack und ausgeprägtem Aroma des eingetragenen Füllstoffes.

Industrielle Anwendbarkeit

Die Erfindung kann bei der Herstellung von Kefir verwendet werden, der für die Diäternährung und therapeutisch-prophylaktische Kinderernährung bestimmt ist.

PATENTANSPRÜCHE

1. Verfahren zur Herstellung von Kefir, das die Reinigung der Ausgangskuhmilch, das Normalisieren des Trockenmassegehaltes derselben, die Wärmebehandlung, das Eintragen des an Kefirpilzen vorbereiteten Sauers in einer Menge von 1 bis 5%, bezogen auf die Milchmasse, die Säuerung der erhaltenen Mischung bei einer Temperatur von 20 bis 25°C, die Abkühlung der gesäuerten Mischung auf eine Temperatur von 6 bis 8°C, die Abfüllung vorsieht, d a d u r c h g e k e n n z e i c h n e t, dass man das Normalisieren des Trockenmassegehaltes der Milch durch Ultrafiltration der Ausgangsmilch bei einer Temperatur von 50 bis 55°C verwirklicht, wobei man den Trockenmassegehalt der normalisierten Milch um 0,5-4,0 Masse%, bezogen auf den Trockenmassegehalt der Ausgangsmilch, erhöht, die Wärmebehandlung der normalisierten Milch bei einer Temperatur von 140°C verwirklicht und die Säuerung der Mischung bis zum Erreichen eines pH-Wertes von 5,0 bis 4,7, das Aushalten der gesäuerten Mischung bei einer Temperatur von 18 bis 20°C bis zum Erreichen eines pH-Wertes von 4,7 bis 4,5 durchführt.

2. Verfahren nach Anspruch 1, d a d u r c h g e - k e n n z e i c h n e t, dass man der Ausgangsmilch nach der Reinigung derselben Natrium- und/oder Kaliumzitrate in einer Menge von 0,02 bis 0,03 Masse% zusetzt.

3. Verfahren nach einem beliebigen der Ansprüche 1-3, d a d u r c h g e k e n n z e i c h n e t, dass man vor der Abfüllung der gesäuerte Mischung oder in die Mischung aus der normalisierten Milch und Sauer Obst- und Beerensirupe in einer Menge von 8 bis 10 Masse%, Nahrungsaromastoffe in einer Menge von 0,005 bis 0,01 Masse% zugibt.

# INTERNATIONAL SEARCH REPORT

International Application No PCT/SU 88/00088

## I. CLASSIFICATION OF SUBJECT MATTER (if several classification symbols apply, indicate all) 6

According to International Patent Classification (IPC) or to both National Classification and IPC

IPC⁴ - A 23 C 9/127

## II. FIELDS SEARCHED

### Minimum Documentation Searched 7

| Classification System | Classification Symbols |
|---|---|
| IPC⁴ | A 23 C 9/12, 9/127,9/13,9/133 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A,P | SU, AI, 1369710, (Odessky tekhnologichesky institut pischevoi promyshlennosti im. I.V. Lomonosova et al.), 30 January 1988 (30.01.88), see claims | 1 |
| A | GB, A, 1300355 (VSESOJUZNY NAUCHNO-ISSLEDO-VATELSKY INSTITUT MOLOCHNOI PROMYSH-LENNOSTI (VNIMI), 20 December 1972 (20.12.72), see claims | 1 |
| A | DE, AI, 3300122, (Klupsch, Hans-Joachim), 5 July 1984 (05.07.84), see claims &, EP, AI, 0148300 | 1 |
| A | SU, AI, 736937, (Vsesojuzny nauchno-issle-dovatelsky institut molochnoi promysh-lennosti et al.), 30 May 1980 (30.05.80), see claim 2 | 2 |
| A | SU, AI, 698601, (Moskovskoe proizvodstvennoe obiedinenie "Moloko"), 25 November 1979 (25.11.79), see column 2, lines 15-28 | 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 24 June 1988 (24.06.88) | 8 August 1988 (08.08.88) |

| International Searching Authority | Signature of Authorized Officer |
|---|---|
| ISA/SU | |